# EUROPEAN PATENT APPLICATION

(11) **EP 2 639 045 A2**
(43) Date of publication of application: **18.09.2013**
(21) Application number: 11839385.9
(22) Date of filing: 21.11.2011
(51) Int. Cl.: B29C 59/04

(54) **MULTI-LAYER SHEET CONSISTING OF A PERFORATED FILM FOR HOLDING LOADS OR PRODUCTS REQUIRING HEAT EXCHANGE FACILITY, AND METHOD FOR PRODUCING SAME**

(30) Priority: 11.11.2010 ES 201031660
(71) Applicant: Ruiz Bernal, Francisco, 30530 Cieza (ES)
(72) Inventor: Ruiz Bernal, Francisco, 30530 Cieza (ES)
(74) Representative: Ungria López, Javier
(86) International application number: PCT/IB2011/003339
(87) International publication number: WO 2012/063136

(57) **Abstract**

The invention relates to a sheet of a plastic film macroperforated by means of a cold punching process and formed by one or more layers, to be used mainly in the packaging of palletising systems, enabling optimum ventilation without creating a heat barrier, and reducing the consumption of polymer materials without reducing the mechanical resistance.

## Description

### Sector of the technique

The invention object of the patent fits in the sector of materials intended for the packaging of palletized products, especially for use in the food sector, which, due to its characteristics, need the absence of a heat barrier, either because they need the input of cold, such as in the case of products that need refrigeration or freezing, or because they need the dissipation of heat, preventing condensation.

### State of the art

The objective of disposing of micro or macroperforated plastics is to have a resistant material, mainly intended for the packaging of palletizing systems, which enables a optimum ventilation without creating a heat barrier, and reduces the consumption of polymer materials without reducing the mechanical resistance.

Currently, in order to increase the mechanical resistance of plastic films elaborated by means of diverse punching techniques, and to improve their characteristics, different chemical products are applied or longitudinal reinforcement strips on the edges or washers surrounding the perforations are applied, normally with the input of heat or complex physicochemical processes.

These currently existing processes present the inconvenience of needing more or less complex techniques that usually require very large devices with high energy consumption.

Therefore, the objective is to obtain a macroperforated sheet of film by means of the simplest process possible, said sheet of film will be made up by two or more layers of material which, after being punched in a simultaneous manner in a process as the one described in patent application 201030581/7, and, thanks to the sticky texture of the sheet, the film can be handled as a single film that can be pre-stretched and rewound for its use in a conventional packaging system. Due to the foregoing, there is no need to dispose of accumulated material at the edge of the perforation for its later pre-stretching, which allows the elongation suffered to be more uniform in the whole surface of the sheet of film.

### Detailed description of the invention

The invented sheet of film is made up by two or more sheets of film that are subjected to a mechanical cold punching process in a joint manner. The size, the shape and the disposition of the holes can be modified depending on the applications desired for the final product. In order to obtain this product, a punching and winding system as the one described in the patent-pending invention 201030581/7 is applied, this system consists of feeding plastic film for automatic unwinding, feeding a double roller that rotates simultaneously after the plastic film coils have been fed. One of these cylinders, the punching cylinder, is provided with a set of reliefs, in the desired disposition and shape on its surface. The entire punching equipment is made of tempered steel. When passing through both rollers, the film is subjected to such a pressure that the punching cylinder is able to produce the complete and clean cut of each one of the holes to be made. This pressure can be adjusted as is convenient thanks to a hydraulic pressure gauge system, depending on the material to be punched and its thickness, which allows varying the number of sheets to be perforated simultaneously. Once the sheets of plastic have been punched and the surplus punching material has been removed, the unwinding of the product elaborated in 2, 3 or more layers is carried out in both rollers set at the end of the punching process, said product being manageable as a single multi-layer film.

The product obtained in this manner can then be subjected to pre-stretching processes with the aim of obtaining a double objective: a significant increase in the output based on length (approximately 300 per cent), which means reducing the consumption of raw materials, the reduction of waste and energy costs; and providing the film with a memory effect, which facilitates holding the loads on the pallet.

The product obtained in this manner allows a multiplicity of input/output options (i/o), which can consist of: i-input coils o-output coils (i/o), thus obtaining n number of macroperforated multi-layer film output coils, where i and o represent the number of input and output coils, respectively. The most usual combinations are the following: 2 input, 1 output (double sheet); 2 input, 2 output (single sheet); 6 input, 3 output (double sheet); 6 input, 2 output (triple sheet). The combinations obtained in this manner would be practically unlimited and allow obtaining a product whose mechanical resistance can be obtained "à la carte" according to the needs of the material to be packaged, all of the foregoing with a lower weight than that the weight obtained when using non-perforated film or mechanically reinforced perforated film with external elements as indicated above.

### Description of the drawings

A series of drawings describing the process that intend to graphically illustrate the aforementioned manufacturing process accompany the present specification.

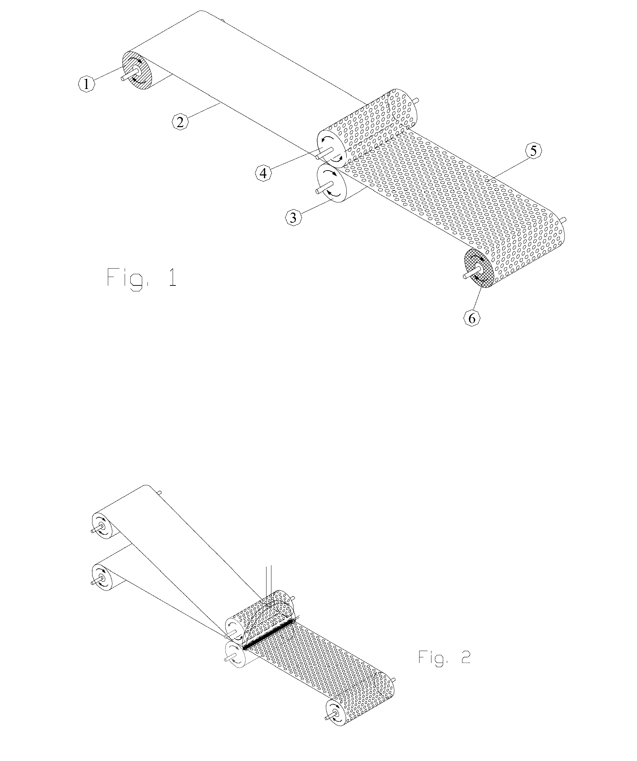

Figure 1 shows a simplified scheme of the macroperforation process according to patent application 201030581/7, in which the most important parts of the process resulting in the macroperforated film are identified: the untreated plastic coil (1) is unwound and the film (2) passes through the feed rollers (3) and blanking (4) cylinders, and after the macroperforation process, a perforated film (5) gathered in a coil (6) is obtained.

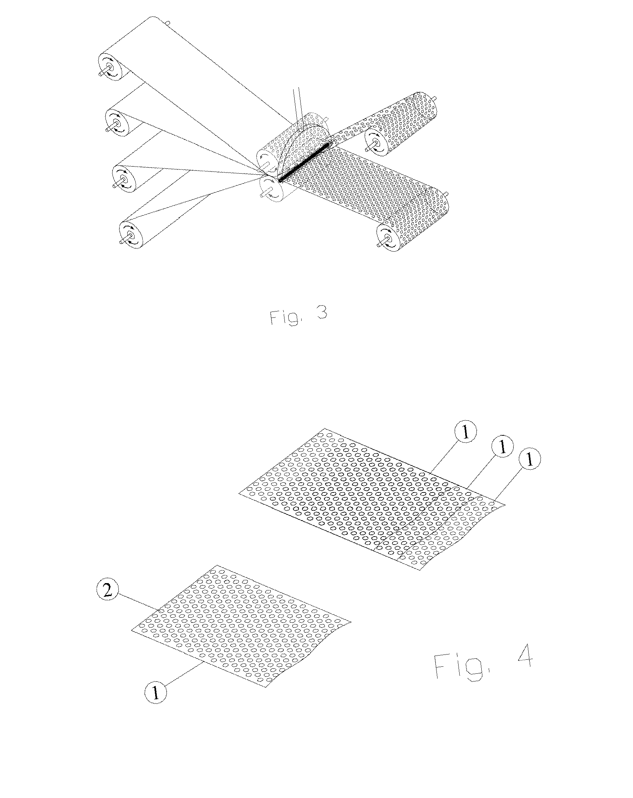

Figures 2 and 3 show the variant described for 2n input coils, n output coils (the 2-1 and 4-2 combinations are represented to simplify the drawing), with which a multi-layer film, 2 layers in this case, is obtained, although as indicated above, the coil combination can be different.
Figure 4 shows a monolayer plastic film (1) with the holes of the process described above and a multi-layer film (three in this case) formed by three sheets of film (1)(1)(1).

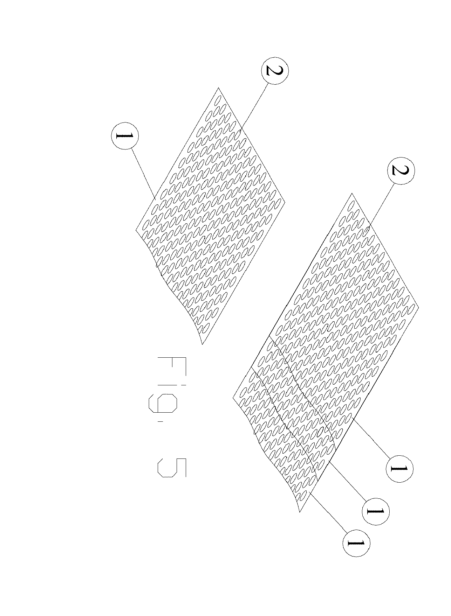

Finally, figure 5 shows the same film described above but after being subjected to the stretching process, where the holes (2) and the film (1) have suffered elongation.

## Claims

1. Macroperforated film, **characterized in that** its cold punching has been carried out by means of adjustable pressure.

2. Film, according to claim 1, which allows obtaining a sheet of two or more layers that remain together and allow to be managed as a single sheet for applications requiring greater resistance during packaging.

3. Film according to claims 1 and 2, pre-stretched for its use in packaging systems.

4. Film, according to claims 1, 2 and 3, highly resistant with less amount of plastic per surface.

5. Film according to claims 2 and 3, with a different number of layers according to the resistance needs required in the packaging process.
